# EUROPEAN PATENT SPECIFICATION

(11) **EP 3 892 683 B1**
(45) Date of publication and mention of the grant of the patent: **06.11.2024**
(21) Application number: 19892003.5
(22) Date of filing: 06.12.2019
(51) Int. Cl.: C08L 75/04, C08G 18/24, C08K 5/523, C08G 18/20, C08K 5/12, C08K 5/00, C08K 5/10, C08K 5/521, C08K 5/544, C08L 75/06, C08G 18/10, C08G 18/48, C08G 18/76, C08G 18/78, C08L 75/08

(54) **POLYURETHANE RESIN COMPOSITION**
POLYURETHANHARZZUSAMMENSETZUNG
COMPOSITION DE RÉSINE DE POLYURÉTHANE

(30) Priority: 07.12.2018 KR 20180156643; 07.12.2018 KR 20180156644
(43) Date of publication of application: 13.10.2021
(73) Proprietor: KCC Corporation, Seoul 06608 (KR)
(72) Inventor: KIM, Jae Hyo, Yongin-si, Gyeonggi-do 16891 (KR); LEE, Jae Young, Ulsan 44459 (KR); KWON, Jin Wook, Ulsan 46615 (KR); JEONG, Beom Seock, Busan 49522 (KR); CHOI, Seung Yeob, Hwaseong-si, Gyeonggi-do 18442 (KR); KIM, Chan Hun, Yongin-si, Gyeonggi-do 16918 (KR); KIM, Byong Su, Ulsan 44536 (KR); JEONG, Heung Gyu, Tongyeong-si, Gyeongsangnam-do 53055 (KR)
(74) Representative: Cabinet Laurent & Charras
(86) International application number: PCT/KR2019/017229
(87) International publication number: WO 2020/117009

(56) References cited:
- EP-A1- 3 549 965
- EP-A1- 3 747 948
- WO-A1-2018/100674
- WO-A1-2018/119717
- WO-A1-2019/151640
- KR-A- 20030 057 384
- KR-A- 20090 026 572
- KR-A- 20150 110 754
- KR-A- 20190 092 109
- KR-B1- 101 601 782

## Description

### TECHNICAL FIELD

The present invention relates to a 1-liquid type polyurethane resin composition used as an adhesive.

### BACKGROUND ART

Generally, polyurethane resins have a urethane bond in a molecule and excellent abrasion resistance, oil resistance, solvent resistance, etc., and are used in diverse fields including adhesive, injection molding, ink, paint, foamed body, etc.

Document WO 2018/100674 describes a polyurethane resin composition comprising a first urethane resin (a urethane prepolymer), a second urethane resin (obtained by reacting a polyether polyol, an aminoalkoxy silane-based compound and an isocyanate-bonded biuret body), a plasticizer, a pigment, and a catalyst.

As a case of using such a polyurethane resin as an adhesive, a case of attaching a base material such as glass onto a coated surface of a car body may be included. However, since the conventional polyurethane resin had degraded adhesiveness with the coated surface of a car body, a primer was required to be applied on the coated surface first, a polyurethane resin was applied thereon, and then, a base material such as glass was attached. Like this, a primer coating process was essentially, and in case of using the conventional polyurethane resin, there were problems in that a process for attaching a base material such as glass onto the coated surface of a car body became complicated.

In addition, the conventional polyurethane resin had a short pot life, degraded workability, and degraded adhesiveness at a low temperature, and there were defects of having lots of limitations on usage environments of the polyurethane resin.

### DISCLOSURE OF THE INVENTION

### TECHNICAL PROBLEM

The present invention provides a polyurethane resin composition which may sufficiently secure a pot life and has excellent adhesiveness in a broad temperature range.

### TECHNICAL SOLUTION

The present invention provides a polyurethane resin composition, comprising:
a first urethane resin;
a second urethane resin obtained by reacting a polyether polyol, an aminoalkoxy silane-based compound and an isocyanate-bonded biuret body; and
a plasticizer,
wherein the aminoalkoxy silane-based compound is a compound represented by the following Chemical Formula 2: 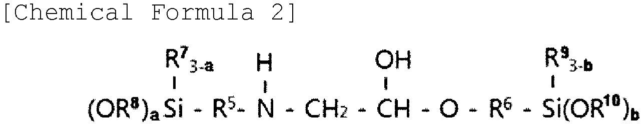 wherein R⁵ and R⁶ are the same or different, and are each independently an alkylene group of C₂ to C₃, R⁷ to R¹⁰ are the same or different, and are each independently an alkyl group of C₁ to C₁₀, and a and b are integers of 1 to 3, respectively.

### ADVANTAGEOUS EFFECTS

The polyurethane resin composition of the present invention has excellent adhesiveness in a broad temperature range (for example, 5 to 35°C), and secures a sufficient pot life and has excellent workability. Particularly, when the polyurethane resin composition of the present invention is used as an adhesive for attaching a base material such as glass onto the coated surface of a car body, excellent adhesive effects may be obtained without applying a primer on the coated surface of the car body.

### BEST MODE FOR CARRYING OUT THE INVENTION

In the present disclosure, NCO% may represent the content of an unreacted isocyanate group by wt% based on the total weight of a resin.

The present invention relates to a 1-liquid type polyurethane resin composition which is characterized in including a specific urethan resin and showing excellent adhesiveness, and particular explanation thereon is as follows.

The polyurethane resin composition of the present invention includes a first urethane resin, a second urethane resin obtained by reacting a polyether polyol, an aminoalkoxy silane-based compound and an isocyanate-bonded biuret body, and a plasticizer, wherein the aminoalkoxy silane-based compound is a compound represented by the following Chemical Formula 2: 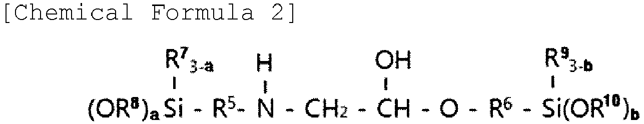 wherein R⁵ and R⁶ are the same or different, and are each independently an alkylene group of C₂ to C₃, R⁷ to R¹⁰ are the same or different, and are each independently an alkyl group of C₁ to C₁₀, and a and b are integers of 1 to 3, respectively.

### First urethane resin

The first urethane resin plays an importance role on dispersibility, thixo properties, adhesiveness, and mechanical properties.

The first urethane resin may be a urethane prepolymer obtained by reacting a polyol compound and an isocyanate compound.

The polyol compound may include, for example, one or more selected from the group consisting of a polyethylene glycol, a polypropylene glycol, a polytetramethylene glycol, and a polypropylene triol. In this case, the polyol compound may have a weight average molecular weight (Mw) of 500 to 10,000 g/mol, 1,000 to 8,000 g/mol, 1,500 to 6,000 g/mol, or 2,000 to 5,000 g/mol.

The isocyanate compound may include, for example, 2,4-toluene diisocyanate (2,4-TDI), 2,6-toluene diisocyanate (2,6-TDI), 4,4'-diphenylmethylene diisocyanate (4,4'-MDI), 2,4'-diphenylmethylene diisocyanate (2,4'-MDI), 1,4-phenylene diisocyanate, 1,5-naphthalene diisocyanate, ethylene diisocyanate, propylene diisocyanate, tetramethylene diisocyanate, hexamethylene diisocyanate, or isophorone diisocyanate.

For the reaction of the polyol compound and the isocyanate compound, a plasticizer (first plasticizer) may be used. Particular examples of the plasticizer may include dioctyl phthalate, dibutyl phthalate, dioctyl adipate, diisodecyl phthalate, diisononyl phthalate, or mixtures thereof.

The first urethane resin may have a weight average molecular weight (Mw) of 2,500 to 15,000 g/mol, 5,000 to 15,000 g/mol, or 7,000 to 12,000 g/mol, in consideration of the viscosity, flexibility, etc. of the polyurethane resin composition.

In addition, the first urethane resin may have the content of an unreacted isocyanate group (NCO%) of 0.5 to 3.0, 1.0 to 2.5, or 1.2 to 2.2 based on the total weight of the resin.

The first urethane resin may be included in an amount of 35 to 70 parts by weight, 40 to 65 parts by weight, or 50 to 65 parts by weight in the composition based on 3 to 14 parts by weight of a second urethane resin. If the amount of the first urethane resin deviates from the aforementioned range, the flexibility, adhesiveness, heat resistance, etc. of the polyurethane resin composition may be deteriorated.

### Second urethane resin

The second urethane resin plays an important role on adhesiveness with a base material.

The second urethane resin is obtained by reacting a polyether polyol, an aminoalkoxy silane-based compound and an isocyanate-bonded biuret body. In this case, the second urethane resin may be a different urethane resin from the first urethane resin.

The polyether polyol absorbs moisture in the air due to the hygroscopic properties of the material itself to accelerate the hydrolysis of the aminoalkoxy silane-based compound, and reacts with the biuret body to form a urethane bond. Such a polyether polyol may include one or more selected from the group consisting of a polyethylene glycol, a polypropylene glycol, a polybutylene glycol and a polytetramethylene glycol. In addition, the polyether polyol may have a weight average molecular weight (Mw) of 200 to 2,000 g/mol, 200 to 1,000 g/mol, or 200 to 600 g/mol.

The aminoalkoxy silane-based compound improves the adhesiveness, reactivity at a low temperature, etc. of the second urethane resin. Particularly, the aminoalkoxy silane-based compound is represented by Chemical Formula 2 below. Alternatively, the aminoalkoxy silane-based compound may be a compound represented by Chemical Formula 1, which is not encompassed by the claims.

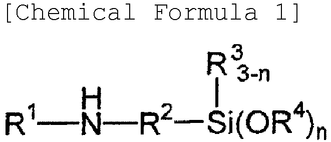

(In Chemical Formula 1,
R¹ is a C₆ to C₁₀ aryl group, which is substituted with an alkyl group of C₁ to C₁₀ or unsubstituted,
R² is an alkylene group of C₂ to C₁₀,
R³ and R⁴ are the same or different, and are each independently an alkyl group of C₁ to C₁₀, and
n is an integer of 1 to 3.)

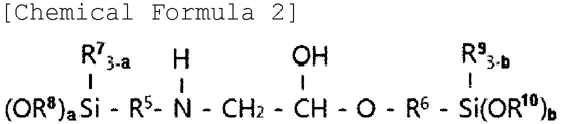

In Chemical Formula 2,
R⁵ and R⁶ are the same or different, and are each independently an alkylene group of C₂ to C₃,
R⁷ to R¹⁰ are the same or different, and are each independently an alkyl group of C₁ to C₁₀, and
a and b are integers of 1 to 3, respectively.

In this case, the alkyl group may include, for example, a methyl group, an ethyl group, a propyl group, a butyl group, a pentyl group, a hexyl group, a cyclopentyl group, a cyclohexyl group, etc, particularly, a methyl group, an ethyl group or a propyl group. In addition, the alkyl group may be a linear or branch type.

The aryl group may be, for example, a phenyl group, a tolyl group, a xylyl group, a naphthyl group, biphenylene, etc., particularly, a phenyl group.

The alkylene refers to a branched, linear or cyclic radical, derived from an alkyl group by removing one hydrogen atom from a carbon atom thereof. That is, the alkylene may be a divalent radical.

The compound represented by Chemical Formula 2 may be a compound obtained by reacting an amino silane compound and an epoxy silane compound in a molar ratio of 1 : 0.1 to 1 : 2. In this case, particular examples of the amino silane compound may include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, or N-phenyl-3-aminopropyltrimethoxysilane. In addition, particular examples of the epoxy silane may include 3-glycidoxypropyl methyldimethoxysilane, 3-glycidoxypropyl trimethoxysilane, 3-glycidoxypropyl methyldiethoxysilane, or 3-glycidoxypropyl triethoxysilane.

Particularly, the aminoalkoxy silane-based compound represented by Chemical Formula 1, which is not encompassed by the claims, may be N-phenyl-gamma-aminopropyltrimethoxy silane as an aromatic ring-bonded aminoalkoxy silane-based compound.

Particularly, the aminoalkoxy silane-based compound represented by Chemical Formula 2 may be a compound obtained by reacting 3-aminopropyltriethoxysilane and 3-glycidoxypropyl trimethoxysilane in a molar ratio of 1 : 0.5 to 1 : 1.5, for example, in a molar ratio of 1 : 0.7 to 1 : 1.2.

The isocyanate-bonded biuret body improves the adhesiveness, crosslinking properties, etc. of the second urethane resin.

The isocyanate bonded to the biuret body may include, for example, one or more selected from the group consisting of hexamethylene diisocyanate, cyclopentylene-1,3-diisocyanate, cyclohexylene-1,2-diisocyanate, hexahydroxylylene diisocyanate, dicyclohexyl-4,4-diisocyanate, 1-methyl-2,4-diisocyanatocyclohexane, 1-methyl-2,6-diisocyanatocyclohexane, bis(4-isocyanatocyclohexyl)methane, 1,4-diisocyanatocyclohexane and 1,3-diisocyanatocyclohexane.

The biuret body may be a biuret body in which three or more isocyanate groups are bonded. Particularly, the biuret body may be 1,3,5-tris(6-isocyanatohexyl)biuret or a trimer of hexamethylene diisocyanate.

The isocyanate-bonded biuret body may have the unreacted isocyanate group content (NCO%) of 15 to 30, or 18 to 28 based on the total weight of the biuret body.

The second urethane resin may be obtained by reacting the polyether polyol, the aminoalkoxy silane-based compound and the isocyanate-bonded biuret body in a molar ratio of 1: 1 to 4: 3 to 8.

The second urethane resin may have a weight average molecular weight (Mw) of 500 to 2,000 g/mol in consideration of the viscosity, adhesiveness, etc. of the polyurethane resin composition. In addition, the second urethane resin may have the unreacted isocyanate group content (NCO%) of 5 to 25, or 8 to 17 based on the total weight of the resin.

The second urethane resin may be included in an amount of 3 to 14 parts by weight, or 5 to 10 parts by weight in the composition based on 35 to 70 parts by weight of the first urethane resin. If the amount of the second urethane resin deviates from the aforementioned range, the adhesiveness (particularly, adhesiveness at a low temperature), etc. of the polyurethane resin may be deteriorated.

The composition may include the first urethane resin and the second urethane resin in a weight ratio of 10 : 1 to 10 : 3, or a weight ratio of 10 : 1 to 10 : 2. If the mixing weight ratio of the first urethane resin and the second urethane resin deviates from the aforementioned range, the adhesiveness of the polyurethane resin may be deteriorated, or curing may be delayed, and crack may be generated in a coated film.

### Plasticizer

The plasticizer (second plasticizer) included in the polyurethane resin composition of the present invention plays the role of providing the polyurethane resin composition with flexibility, elasticity, etc.

The plasticizer may include, for example, one or more selected from the group consisting of a phthalate-based plasticizer and a phosphate-based plasticizer.

The phthalate-based plasticizer may include, for example, one or more selected from the group consisting of dibutyl phthalate, di-2-ethylhexyl phthalate, diisononyl phthalate, diisodecyl phthalate and butylbenzyl phthalate.

The phosphate-based plasticizer may include, for example, one or more selected from the group consisting of 2-ethylhexyldiphenyl phosphate, tri-cresyl phosphate and cresyldiphenyl phosphate.

In this case, in order to improve the thermal stability together with flexibility and plasticity of the polyurethane resin composition, a mixture of diisononyl phthalate and 2-ethylhexyldiphenyl phosphate may be used as the plasticizer.

The plasticizer may be included in an amount of 5 to 30 parts by weight, 5 to 20 parts by weight, or 5 to 15 parts by weight in the composition based on 35 to 70 parts by weight of the first urethane resin. If the amount of the plasticizer deviates from the aforementioned range, the flexibility, plasticity, etc. of the polyurethane resin composition may be deteriorated.

The polyurethane resin composition of the present invention may further include a pigment and a catalyst.

### Catalyst

The catalyst included in the polyurethane resin composition of the present invention plays the role of controlling the curing reaction rate of the polyurethane resin composition to secure a sufficient pot life during a painting process.

The catalyst may include, for example, one or more selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanediyl)bismorpholine and dimethyl-4-morphline ethaneamine.

Particularly, the catalyst may include dioctyltin dilaurate and 4,4'-(oxydi-2,1-ethanediyl)bismorpholine. In addition, the catalyst may further include one or more additional catalysts selected from the group consisting of dibutyltin mercaptide and dimethyl-4-morpholine ethaneamine. For example, the catalyst may include dioctyltin dilaurate, 4,4'-(oxydi-2,1-ethanediyl)bismorpholine and dibutyltin mercaptide, or may include dioctyltin dilaurate, 4,4'-(oxydi-2,1-ethanediyl)bismorpholine and dimethyl-4-morpholine ethaneamine.

In case where the polyurethane resin composition uses the above-described three types of catalysts, the curing reaction rate of the polyurethane resin composition may be suitably controlled, and a sufficient pot life may be secured during a painting process.

Particularly, the catalyst may include dioctyltin dilaurate, 4,4'-(oxydi-2,1-ethanediyl)bismorpholine and the additional catalyst in a weight ratio of 0.01 to 0.3: 0.001 to 0.3: 0.001 to 0.1, or a weight ratio of 0.01 to 0.1: 0.01 to 0.1: 0.005 to 0.05. If the mixing ratio of catalyst deviates from the aforementioned range, the control of the curing reaction rate of the polyurethane resin composition may become difficult.

The catalyst may be included in the composition in an amount of 0.001 to 0.5 parts by weight, 0.01 to 0.3 parts by weight, 0.08 to 0.2 parts by weight, or 0.10 to 0.17 parts by weight based on 35 to 70 parts by weight. If the amount of the catalyst deviates from the aforementioned range, the curing reactivity of the polyurethane resin composition may be deteriorated, or the pot life may be reduced, and workability may be deteriorated.

### Pigment

The pigment plays the role of improving the strength of a polyurethane resin composition and providing color.

The pigment may include, for example, carbon black, calcium carbonate, titanium dioxide (TiO₂), iron oxide yellow, iron oxide red, etc.

The pigment may be included in an amount of 20 to 40 parts by weight, or 20 to 30 parts by weight in the composition based on 35 to 70 parts by weight of the first urethane resin. If the amount of the pigment deviates from the aforementioned range, the strength of the polyurethane resin composition may be degraded, or the control of the viscosity of the polyurethane resin composition may become difficult.

In addition, the polyurethane resin composition of the present invention may further include a thickener commonly used for controlling the viscosity of the composition.

As described above, since the polyurethane resin composition of the present invention includes the second urethane resin obtained by reacting specific compounds, adhesiveness is excellent together with flexibility, heat resistance, strength, etc. Due to the excellent adhesiveness, if the polyurethane resin composition of the present invention is used as an adhesive for attaching a base material such as glass to the coated surface of a car body, the base material may be directly attached without applying a primer on the coated surface.

### MODE FOR CARRYING OUT THE INVENTION

Hereinafter, the present invention will be explained particularly referring to embodiments. However, the embodiments are only for illustrating the present invention, and the present invention is not limited thereto.

### Comparative Example 10. Preparation of polyurethane resin composition

### 1) Preparation of first urethane resin

Polypropylene glycol, diisononyl phthalate, and polypropylene triol were injected into a glass flask equipped with a stirrer, a condenser and a thermometer, and the pressure was reduced to vacuum for 2 hours, while slowly raising the temperature to 140°C. Then, the temperature was reduced to 60°C or less, methylene diphenyl diisocyanate (MDI) was injected, and the heating was secured. Then, the reaction was performed while the temperature was maintained to 80 to 90°C until NCO% reached 1.72. After finishing the reaction, the temperature was reduced to 40°C, and a first urethane resin having a viscosity of 8,400 cps, and a weight average molecular weight (Mw) of 9,000 g/mol was prepared.

### 2) Preparation of second urethane resin

Polypropylene glycol was injected into a glass flask equipped with a stirrer, a condenser and a thermometer, and the pressure was reduced to vacuum for 2 hours, while raising the temperature to 140°C. Then, the temperature was reduced to 60°C or less, 1,3,5-tris(6-isocyanatohexyl)biuret was injected, and the heating was secured. Then, the reaction was performed while the temperature was maintained to 100°C until NCO% reached 14.0 to 15.0. After that, the temperature was reduced to 40°C, N-phenyl-gamma-aminopropyltrimethoxy silane was injected, and the reaction was performed while maintaining the temperature to 45°C until NCO% reached 11.3. After finishing the reaction, the temperature was reduced to 40°C, and a second urethane resin having a viscosity of 9,800 cps was prepared.

### 3) Preparation of polyurethane resin composition

Into a mixer apparatus of a SUS material, which is connected with a vacuum pump and a heatable jacket, and in which high viscosity rotation stirring and wall scrubbing are possible, the first urethane resin prepared above, and a plasticizer were injected, and stirring was performed while raising the temperature to 60°C. Then, a pigment was injected, stirring was performed for 20 minutes, and the pressure was reduced for 10 minutes with vacuum of less than 20 torr to remove moisture. Then, a catalyst and the second urethane resin prepared above were injected, and stirring was performed for 30 minutes to prepare a polyurethane resin composition having a viscosity of 14,000 Ps, and the NCO% of 1.52.

During preparing the resins and the composition, the composition of the components were controlled as in Table 1 below.

### Examples 1 to 3 and Comparative Examples 10 to 14.

Polyurethane resin compositions were prepared by the same method as in Comparative Example 10 except for applying the compositions in Tables 1 and 2 below. In this case, the viscosity was controlled using a thickener in Comparative Example 13.

**[Table 1]**

| Component | | Compa rativ e Examp le 10 | Compa rativ e Examp le 11 | Compa rativ e Examp le 12 | Compa rativ e Examp le 13 | Compa rativ e Examp le 14 | Examp le 1 | Examp le 2 | Examp le 3 |
|---|---|---|---|---|---|---|---|---|---|
| Firs t uret hane resi n | Polypropylene glycol (Mw: 2,000 g/mol, viscosity: 150-175 cps) | 13 | 13 | 13 | 13 | 13 | 13 | 13 | 13 |
| | Diisononyl phthalate | 12.2 | 12.2 | 12.2 | 12.2 | 12.2 | 12.2 | 12.2 | 12.2 |
| | Polypropylene triol (Mw: 4,800 g/mol, viscosity: 850 cps) | 25 | 25 | 25 | 25 | 25 | 25 | 25 | 25 |
| | Methylene diphenyl diisocyanate (Mw: 250 g/mol, NCO%: 33.6) | 7 | 7 | 7 | 7 | 7 | 7 | 7 | 7 |
| Seco nd uret hane resi n | Polypropylene glycol (Mw: 400 g/mol, viscosity: 100 cps or less) | 1 | 1 | 1 | 1 | 1 | 1 | 1 | 1 |
| | N-phenyl-gamma-aminopropyltrimethoxy silane | 1 | 1 | 1 | 1 | 1 | - | - | - |
| | Reaction product of 3-aminopropyltriethoxy silane and 3-glycidoxypropyltrimethox y silane (reaction ratio = molar ratio of 1:1) | - | - | - | - | - | 1 | 1 | 1 |
| | 1,3,5-tris(6-isocyanatohexyl)biuret (Mw: 478 g/mol, viscosity: 2,000 cps, NCO%: 23.5) | 6 | 5 | 5 | 5 | 6 | 6 | 5 | 5 |
| Plas tici zer | Diisononyl phthalate | 10.68 | 11.68 | 11.67 | 8.38 | 10.68 | 10.68 | 11.68 | 11.68 |
| | 2-ethylhexyldiphenyl phosphate | 0.7 | 0.7 | 0.7 | 0.7 | 0.7 | 0.7 | 0.7 | 0.7 |
| Pigm ent | Carbon black | 23.29 | 23.29 | 23.29 | 11.79 | 23.29 | 23.29 | 23.29 | 23.29 |
| | Calcium carbonate | - | - | - | 13 | - | - | - | - |
| Thic kene r | Polyester polyol | - | - | - | 1.4 | - | - | - | - |
| | 1,6-hexamethylene diisocyanate | - | - | - | 0.2 | - | - | - | - |
| | Diethyl malonate | - | - | - | 0.2 | - | - | - | - |
| Cata lyst | Dioctyltin dilaurate | 0.02 | 0.02 | 0.02 | 0.02 | 0.03 | 0.02 | 0.02 | 0.03 |
| | 4,4'-(oxydi-2,1-ethanediyl) bismorpholine (amine equivalent: 8.1-8.5 g/eq) | 0.1 | 0.1 | 0.1 | 0.1 | 0.1 | 0.1 | 0.1 | 0.1 |
| | Dibutyltin mercaptide | 0.01 | - | 0.01 | 0.01 | | 0.01 | - | - |
| | dimethyl-4-morpholine ethaneamine | - | 0.01 | 0.01 | - | - | - | 0.01 | - |
| Total (parts by weight) | | 100 | 100 | 100 | 100 | 100 | 100 | 100 | 100 |

### Comparative Examples 1 to 9

Polyurethane resin compositions were prepared by the same method as in Comparative Example 10 except for applying the components in Table 2 below.

**[Table 2]**

| Component | | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 | Compa rativ e Examp le 9 |
|---|---|---|---|---|---|---|---|---|---|---|
| Firs t uret hane resi n | Polypropylene glycol (Mw: 2,000 g/mol, viscosity: 150-175 cps) | 13 | 13 | 13 | 13 | 13 | 13 | 13 | 13 | 13 |
| | Diisononyl phthalate | 12.2 | 12.2 | 12.2 | 12.2 | 12.2 | 12.2 | 12.2 | 12.2 | 12.2 |
| | Polypropylene triol (Mw: 4,800 g/mol, viscosity: 850 cps) | 25 | 25 | 25 | 25 | 25 | 25 | 25 | 25 | 25 |
| | Methylene diphenyl diisocyanate (Mw: 250 g/mol, NCO%: 33.6) | 7 | 7 | 7 | 7 | 7 | 7 | 7 | 7 | 7 |
| Seco nd uret hane resi n | Polypropylene glycol (Mw: 400 g/mol, viscosity: 100 cps or less) | - | - | 1 | 1 | 1 | 1 | - | - | 1 |
| | N-phenyl-gamma-aminopropyltrime thoxy silane | 1 | 1 | - | - | - | 1 | 1 | 1 | 1 |
| | 1,3,5-tris(6-isocyanatohexyl) biuret (Mw: 478 g/mol, viscosity: 2,000 cps, NCO%: 23.5) | 5 | 5 | 5 | 5 | 5 | - | 5 | 5 | 5 |
| | Vinyl trimethoxy silane | 1 | 1 | 1 | - | - | - | 1 | 1 | 1 |
| | 3-mercaptopropyl trimethoxysilane | - | - | - | 1 | - | - | - | - | - |
| | Hexamethylene diisocyanate | - | - | - | - | - | 6 | - | - | - |
| Plas tici zer | Diisononyl phthalate | 11.68 | 11.68 | 12.38 | 12.38 | 9.38 | 10.68 | 11.68 | 11.79 | 10.68 |
| | 2-ethylhexyldiphen yl phosphate | 0.7 | 0.7 | - | - | 0.7 | 0.7 | 0.7 | 0.7 | 0.7 |
| Pigm ent | Carbon black | 23.29 | 23.29 | 23.29 | 23.29 | 11.79 | 23.29 | 23.42 | 23.29 | 22.89 9 |
| | Calcium carbonate | - | - | - | - | 13 | - | - | - | - |
| Thic kene r | Polyester polyol | - | - | - | - | 1.4 | - | - | - | - |
| | 1,6-hexamethylene diisocyanate | - | - | - | - | 0.2 | - | - | - | - |
| | Diethyl malonate | - | - | - | - | 0.2 | - | - | - | - |
| Cata lyst | Dioctyltin dilaurate | 0.02 | 0.02 | 0.02 | 0.02 | 0.02 | 0.02 | - | 0.02 | 0.02 |
| | 4,4'-(oxydi-2,1-ethanediyl)bismo rpholine | 0.1 | 0.1 | 0.1 | 0.1 | 0.1 | 0.1 | - | - | 0.5 |
| | Dibutyltin mercaptide | 0.01 | - | 0.01 | 0.01 | 0.01 | 0.01 | - | | 0.001 |
| | dimethyl-4-morpholine ethaneamine | - | 0. 01 | - | - | - | - | - | - | |
| Total (parts by weight) | | 100 | 100 | 100 | 100 | 100 | 100 | 100 | 100 | 100 |

### Experimental Example.

Physical properties on the polyurethane resin compositions prepared in the Examples and Comparative Examples were evaluated as follows, and the results are shown in Tables 3 and 4.
1. Viscosity: a viscosity at 40°C was measured using Brookfield viscometer (model name: DV2T, for high-viscosity measurement).
2. Specific gravity: a specific gravity at 20°C was measured using an underwater deposition method.
3. Solid content: 1 g of a sample was uniformly spread on an aluminum can with a diameter of 5 cm, and a weight was measured and then, treated in a pan oven of 150°C for 15 minutes, and a ratio of a weight after the treatment was recorded based on a weight before the treatment in the oven.
4. Hardness: a sample composed of a polyurethane resin composition, with a thickness of 5 mm was cured under conditions of 20°C and a relative humidity of 65% for three days, and the hardness was measured with a Shore A hardness meter.
5. TFT: a sample (thickness: 10 mm) composed of a polyurethane resin composition was applied on a coated surface under conditions of 20°C at a relative humidity of 65%, and the duration of time not showing smearing with a nonadhesive tape was measured in minutes.
6. Adhesiveness at low temperature: a composition was attached to a base material to a size of length x width x thickness = 10 mm x 100 mm x 5 mm under conditions of 5°C at a relative humidity of 50% for 7 days.
   After that, one end of the sample was hold and the adhesiveness with a coated surface was confirmed by separating while cutting using a knife, and the area of the sample attached onto the coated surface was shown by % (the results were assessed by 0% if nothing was attached onto the coated surface, and 100% if the entire was attached onto the coated surface).
7. Knirf cut: a sample composed of a polyurethane resin composition (length × width × thickness = 10 mm × 100 mm × 5 mm) was attached onto the coated surface and cured under conditions of 20°C at a relative humidity of 65% for 7 days to form a sample. After that, one end of the sample was hold and the adhesiveness with a coated surface was confirmed by separating while cutting using a knife, and the area of the sample attached onto the coated surface was shown by % (the results were assessed by 0% if nothing was attached onto the coated surface, and 100% if the entire was attached onto the coated surface).
8. Shear strength: a sample was formed into a cured specimen in a dogbone shape with a thickness of 5 mm, and the shear strength was measured using Universal Testing Machine (UTM).
9. Pot life: a composition was applied on a coated surface and stood under specific conditions of temperature and humidity for 5 minutes to attach onto the coated surface, and then cured under conditions of 20°C and a relative humidity of 65%, or 35°C at a relative humidity of 90% for 7 days to form a sample. After that, one end of the sample was hold and the adhesiveness with a coated surface was confirmed by separating while cutting using a knife, and the area of the sample attached onto the coated surface was shown by % (the results were assessed by 0% if nothing was attached onto the coated surface, and 100% if the entire was attached onto the coated surface).

**[Table 3]**

| | | Compa rativ e Examp le 10 | Compa rativ e Examp le 11 | Compa rativ e Examp le 12 | Compa rativ e Examp le 13 | Compa rativ e Examp le 14 | Examp le 1 | Examp le 2 | Examp le 3 |
|---|---|---|---|---|---|---|---|---|---|
| Viscosity (cps) | 10000-22000 cps | 14,00 0 | 13,60 0 | 14,10 0 | 12, 80 0 | 15,50 0 | 15,70 0 | 16,10 0 | 16,00 0 |
| | (@60°C) | | | | | | | | |
| Specific gravity | 1.22-1.42 | 1.27 | 1.27 | 1.27 | 1.29 | 1.22 | 1.27 | 1.27 | 1.23 |
| | (@20°C) | | | | | | | | |
| Solid content (%) | 95% or more | 99% | 99% | 99% | 99% | 99% | 99% | 99% | 99% |
| | (15 min at 150°C) | | | | | | | | |
| Hardness (Hs) | 45-70 | 60 | 58 | 55 | 53 | 55 | 58 | 57 | 57 |
| | (Shore A) | | | | | | | | |
| TFT (min) | 60 min or less | 40 | 48 | 43 | 51 | 45 | 38 | 36 | 48 |
| | (20°C, 65%, 3 hr) | | | | | | | | |
| Adhesiven ess at low temp | 90% or more | 100% | 90% | 90% | 90% | 90% | 100% | 90% | 90% |
| | (5°C, 50%, 7 day) | | | | | | | | |
| Knirf cut | 90% or more | 100% | 100% | 100% | 100% | 100% | 100% | 100% | 100% |
| | (20°C, 65%, 7 day) | | | | | | | | |
| Shear strength (Mpa) | 3.0 or more | 4.5 | 4.1 | 4.7 | 3.1 | 3.9 | 3.8 | 3.7 | 3.7 |
| | (20°C, 65%, 7 day) | | | | | | | | |
| 5 min pot life | 90% or more (20°C, 65%) | 100% | 100% | 100% | 100% | 95% | 100% | 100% | 95% |
| | 90% or more (35°C, 90%) | 100% | 90% | 90% | 95% | 88% | 100% | 90% | 88% |

**[Table 4]**

| | | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 | Compa rativ e Examp le 9 |
|---|---|---|---|---|---|---|---|---|---|---|
| Viscosit y (cps) | 10000-22000 cps | 13900 | 13800 | 14300 | 13900 | 13200 | 14000 | 14500 | 16000 | 15500 |
| | (@60°C) | | | | | | | | | |
| Specific gravity | 1.22-1.42 | 1.27 | 1.27 | 1.27 | 1.27 | 1.29 | 1.25 | 1.27 | 1.22 | 1.26 |
| | (@20°C) | | | | | | | | | |
| Solid content (%) | 95% or more | 99% | 99% | 99% | 99% | 99% | 99% | 99% | 99% | 99% |
| | (15 min at 150°C) | | | | | | | | | |
| Hardness (Hs) | 45-70 | 57 | 55 | 58 | 59 | 51 | 55 | 54 | 50 | 52 |
| | (Shore A) | | | | | | | | | |
| TFT (min) | 60 min or less | 41 | 38 | 40 | 45 | 49 | 38 | 46 | 48 | 51 |
| | (20°C, 65%, 3 hr) | | | | | | | | | |
| Adhesive ness at low temp | 90% or more | 10% | 0% | 0% | 0% | 35% | 90% | 0% | 0% | 90% |
| | (5°C, 50%, 7 day) | | | | | | | | | |
| Knirf cut | 90% or more | 85% | 70% | 80% | 70% | 60% | 70% | 70% | 65% | 70% |
| | (20°C, 65%, 7 day) | | | | | | | | | |
| Shear strength (Mpa) | 3.0 or more | 3.9 | 3.8 | 3.9 | 3.7 | 2.9 | 3.5 | 2.9 | 2.7 | 2.5 |
| | (20°C, 65%, 7 day) | | | | | | | | | |
| 5 min pot life | 90% or more (20°C, 65%) | 30% | 40% | 50% | 10% | 60% | 70% | 40% | 70% | 70% |
| | 90% or more (35°C, 90%) | 0% | 0% | 0% | 0% | 0% | 30% | 0% | 0% | 30% |

Referring to Tables 3 and 4, it could be confirmed that the polyurethane resin composition according to the present invention secured sufficient pot life and showed excellent workability, together with excellent adhesiveness at a low temperature.

## Claims

1. A polyurethane resin composition, comprising:
a first urethane resin;
a second urethane resin obtained by reacting a polyether polyol, an aminoalkoxy silane-based compound and an isocyanate-bonded biuret body; and
a plasticizer,
wherein the aminoalkoxy silane-based compound is a compound represented by the following Chemical Formula 2: 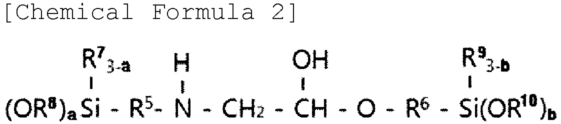
Wherein R⁵ and R⁶ are the same or different, and are each independently an alkylene group of C₂ to C₃,
R⁷ to R¹⁰ are the same or different, and are each independently an alkyl group of C₁ to C₁₀, and
a and b are integers of 1 to 3, respectively.

2. The polyurethane resin composition according to claim 1, wherein the polyether polyol comprises one or more selected from the group consisting of a polyethylene glycol, a polypropylene glycol, a polybutylene glycol and a polytetramethylene glycol.

3. The polyurethane resin composition according to claim 1, wherein the biuret body is 1,3,5-tris(6-isocyanatohexyl)biuret or a trimer of hexamethylene diisocyanate.

4. The polyurethane resin composition according to claim 1, wherein the isocyanate bonded to the biuret body comprises one or more selected from the group consisting of hexamethylene diisocyanate, cyclopentylene-1,3-diisocyanate, cyclohexylene-1,2-diisocyanate, hexahydroxylylene diisocyanate, dicyclohexyl-4,4-diisocyanate, 1-methyl-2,4-diisocyanatocyclohexane, 1-methyl-2,6-diisocyanatocyclohexane, bis(4-isocyanatocyclohexyl)methane, 1,4-diisocyanatocyclohexane and 1,3-diisocyanatocyclohexane.

5. The polyurethane resin composition according to claim 1, wherein the polyether polyol, the aminoalkoxy silane-based compound and the isocyanate-bonded biuret body react in a molar ratio of 1: 1 to 4: 3 to 8.

6. The polyurethane resin composition according to claim 1, wherein the first urethane resin and the second urethane resin are comprised in a weight ratio of 10 : 1 to 10 : 3.

7. The polyurethane resin composition according to claim 1, wherein the plasticizer comprises one or more selected from the group consisting of a phthalate-based plasticizer and a phosphate-based plasticizer.

8. The polyurethane resin composition according to claim 7, wherein the phthalate-based plasticizer comprises one or more selected from the group consisting of dibutyl phthalate, di-2-ethylhexyl phthalate, diisononyl phthalate, diisodecyl phthalate and butylbenzyl phthalate.

9. The polyurethane resin composition according to claim 7, wherein the phosphate-based plasticizer comprises one or more selected from the group consisting of 2-ethylhexyldiphenyl phosphate, tricresyl phosphate and cresyldiphenyl phosphate.

10. The polyurethane resin composition according to claim 1, further comprising a pigment and a catalyst.

11. The polyurethane resin composition according to claim 10, wherein the catalyst comprises one or more selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanediyl)bismorpholine and dimethyl-4-morphline ethaneamine.

12. The polyurethane resin composition according to claim 11, wherein the catalyst comprises dioctyltin dilaurate and 4,4'-(oxydi-2,1-ethanediyl)bismorpholine.

13. The polyurethane resin composition according to claim 12, wherein the catalyst further comprises one or more additional catalysts selected from the group consisting of dibutyltin mercaptide and dimethyl-4-morpholine ethaneamine.

14. The polyurethane resin composition according to claim 13, wherein the dioctyltin dilaurate, 4,4'-(oxydi-2,1-ethanediyl)bismorpholine and the additional catalyst are comprised in a weight ratio of 0.01 to 0.3: 0.001 to 0.3: 0.001 to 0.1.

15. The polyurethane resin composition according to claim 1, wherein the composition comprises 35 to 70 parts by weight of the first urethane resin, 3 to 14 parts by weight of the second urethane resin and 5 to 30 parts by weight of the plasticizer.

## Patentansprüche

1. Polyurethanharzzusammensetzung, umfassend:
ein erstes Urethanharz,
ein zweites Urethanharz, das erhalten wurde, indem ein Polyetherpolyol, eine Aminoalkoxysilan-basierte Verbindung und ein isocyanatgebundener Biuretkörper miteinander umgesetzt wurden; und
einen Weichmacher,
wobei es sich bei der Aminoalkoxysilan-basierten Verbindung um eine Verbindung handelt, welche der Darstellung in der folgenden chemischen Formel 2 entspricht: 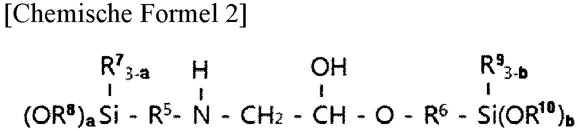
wobei R⁵ und R⁶ vollkommen gleichartig oder verschiedenartig sind und jeweils unabhängig voneinander für eine C₂- bis C₃-Alkylengruppe stehen,
R⁷ bis R¹⁰ vollkommen gleichartig oder verschiedenartig sind und jeweils unabhängig voneinander für eine C₁- bis C₁₀-Alkylgruppe stehen, und
a und b jeweils ganze Zahlen von 1 bis 3 sind.

2. Polyurethanharzzusammensetzung gemäß Anspruch 1, wobei das Polyetherpolyol von der Gruppe, welche aus einem Polyethylenglykol, einem Polypropylenglykol, einem Polybutylenglykol und einem Polytetramethylenglykol besteht, eines oder mehrere daraus ausgewählte umfasst.

3. Polyurethanharzzusammensetzung gemäß Anspruch 1, wobei es sich bei dem Biuretkörper um 1,3,5-tris-(6-Isocyanatohexyl)biuret oder um ein Trimer von Hexamethylendiisocyanat handelt.

4. Polyurethanharzzusammensetzung gemäß Anspruch 1, wobei das Isocyanat, welches an den Biuretkörper gebunden ist, aus der Gruppe welches aus Hexamethylendiisocyanat, Cyclopentylen-1,3-diisocyanat, Cyclohexylen-1,2-diisocyanat, Hexahydroxylylendiisocyanat, Dicyclohexyl-4,4-diisocyanat, 1-Methyl-2,4-diisocyanatocyclohexan, 1-Methyl-2,6-diisocyanatocyclohexan, bis-(4-Isocyanatocyclohexyl)methan, 1,4-Diisocyanatocyclohexan und 1,3-Diisocyanatocyclohexan besteht, eines oder mehrere daraus ausgewählte umfasst.

5. Polyurethanharzzusammensetzung gemäß Anspruch 1, wobei das Polyetherpolyol, die Aminoalkoxysilan-basierte Verbindung und der isocyanatgebundene Biuretkörper in einem Molverhältnis von 1 : 1 bis 4 : 3 bis 8 miteinander umgesetzt werden.

6. Polyurethanharzzusammensetzung gemäß Anspruch 1, wobei das erste Urethanharz und das zweite Urethanharz in einem Gewichtsverhältnis von 10 : 1 bis 10 : 3 enthalten sind.

7. Polyurethanharzzusammensetzung gemäß Anspruch 1, wobei der Weichmacher von der Gruppe, welche aus einem phthalatbasierten Weichmacher und einem phosphatbasierten Weichmacher besteht, einen oder mehrere daraus ausgewählte umfasst.

8. Polyurethanharzzusammensetzung gemäß Anspruch 7, wobei der phthalatbasierte Weichmacher von der Gruppe, welche aus Dibutylphthalat, Di-2-ethylhexylphthalat, Diisononylphthalat, Diisodecylphthalat und Butylbenzylphthalat besteht, einen oder mehrere daraus ausgewählte umfasst.

9. Polyurethanharzzusammensetzung gemäß Anspruch 7, wobei der phosphatbasierte Weichmacher von der Gruppe, welche aus 2-Ethylhexyldiphenylphosphat, Tricresylphosphat und Cresyldiphenylphosphat besteht, eines oder mehrere daraus ausgewählte umfasst.

10. Polyurethanharzzusammensetzung gemäß Anspruch 1, wobei sie weiterhin ein Pigment und einen Katalysator umfasst.

11. Polyurethanharzzusammensetzung gemäß Anspruch 10, wobei der Katalysator aus der Gruppe, welche aus Dimethylzinndioleat, Dibutylzinndimaleat, Dibutylzinndilaurat, Dibutylzinndiacetat, Dibutylzinnoctanoat, Dibutylzinnmercaptid, Dioctylzinndilaurat, Dioctylzinndimaleat, 4,4'-(Oxydi-2,1-ethanediyl)-bis-morpholin und Dimethyl-4-morpholinethanamin besteht, eines oder mehrere daraus ausgewählte umfasst.

12. Polyurethanharzzusammensetzung gemäß Anspruch 11, wobei der Katalysator Dioctylzinndilaurat und 4,4'-(Oxydi-2,1-ethandiyl)-bis-morpholin umfasst.

13. Polyurethanharzzusammensetzung gemäß Anspruch 12, wobei der Katalysator weiterhin einen oder mehrere zusätzliche Katalysatoren umfasst, die aus der Gruppe ausgewählt sind, welche aus Dibutylzinnmercaptid und Dimethyl-4-morpholinethanamin besteht.

14. Polyurethanharzzusammensetzung gemäß Anspruch 13, wobei das Dioctylzinndilaurat, das 4,4'-(Oxydi-2,1-ethandiyl)-bis-morpholin und der zusätzliche Katalysator in einem Gewichtsverhältnis von 0,01 bis 0,3 : 0,001 bis 0,3 : 0,001 bis 0,1 enthalten sind.

15. Polyurethanharzzusammensetzung gemäß Anspruch 1, wobei die Zusammensetzung 35 bis 70 Gewichtsteile des ersten Urethanharzes, 3 bis 14 Gewichtsteile des zweiten Urethanharzes und 5 bis 30 Gewichtsteile des Weichmachers umfasst.

## Revendications

1. Composition de résine de polyuréthane, comprenant :
une première résine d'uréthane ;
une seconde résine d'uréthane obtenue par réaction d'un polyéther polyol, d'un composé à base d'aminoalcoxy silane et d'un corps de biuret lié à de l'isocyanate ; et
un plastifiant,
dans laquelle le composé à base d'aminoalcoxy silane est un composé représenté par la formule chimique 2 suivante : 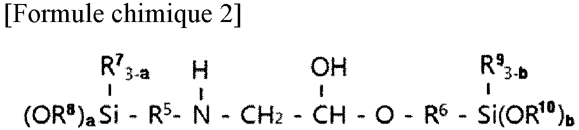
dans laquelle R⁵ et R⁶ sont identiques ou différents, et sont chacun indépendamment un groupe alkylène en C₂ à C₃,
R⁷ à R¹⁰ sont identiques ou différents, et sont chacun indépendamment un groupe alkyle en C₁ à C₁₀, et
a et b sont respectivement des entiers de 1 à 3.

2. Composition de résine de polyuréthane selon la revendication 1, dans laquelle le polyéther polyol comprend un ou plusieurs choisis dans le groupe constitué d'un polyéthylène glycol, d'un polypropylène glycol, d'un polybutylène glycol et d'un polytétraméthylène glycol.

3. Composition de résine de polyuréthane selon la revendication 1, dans laquelle le corps de biuret est un 1,3,5-tris(6-isocyanatohexyl)biuret ou un trimère d'hexaméthylène diisocyanate.

4. Composition de résine de polyuréthane selon la revendication 1, dans laquelle l'isocyanate lié au corps de biuret comprend un ou plusieurs choisis dans le groupe consistant en hexaméthylène diisocyanate, cyclopentylène-1,3-diisocyanate, cyclohexylène-1,2-diisocyanate, hexahydroxylylène diisocyanate, dicyclohexyl-4,4-diisocyanate, 1-méthyl-2,4-diisocyanatocyclohexane, 1-méthyl-2,6-diisocyanatocyclohexane, bis(4-isocyanatocyclohexyl)méthane, 1,4-diisocyanatocyclohexane et 1,3-diisocyanatocyclohexane.

5. Composition de résine polyuréthane selon la revendication 1, dans laquelle le polyéther polyol, le composé à base d'aminoalcoxy silane et le corps de biuret lié à de l'isocyanate réagissent en un rapport molaire de 1: 1 à 4: 3 à 8.

6. Composition de résine de polyuréthane selon la revendication 1, dans laquelle la première résine d'uréthane et la seconde résine d'uréthane sont comprises en un rapport pondéral de 10: 1 à 10: 3.

7. Composition de résine de polyuréthane selon la revendication 1, dans laquelle le plastifiant comprend un ou plusieurs choisis dans le groupe constitué d'un plastifiant à base de phtalate et d'un plastifiant à base de phosphate.

8. Composition de résine de polyuréthane selon la revendication 7, dans laquelle le plastifiant à base de phtalate comprend un ou plusieurs choisis dans le groupe constitué par le phtalate de dibutyle, le phtalate de di-2-éthylhexyle, le phtalate de diisononyle, le phtalate de diisodécyle et le phtalate de butylbenzyle.

9. Composition de résine de polyuréthane selon la revendication 7, dans laquelle le plastifiant à base de phosphate comprend un ou plusieurs choisis dans le groupe constitué par le phosphate de 2-éthylhexyldiphényle, le phosphate de tricrésyle et le phosphate de crésyldiphényle.

10. Composition de résine de polyuréthane selon la revendication 1, comprenant en outre un pigment et un catalyseur.

11. Composition de résine de polyuréthane selon la revendication 10, dans laquelle le catalyseur comprend un ou plusieurs choisis dans le groupe consistant en le dioléate de diméthylétain, le dimaléate de dibutylétain, le dilaurate de dibutylétain, le diacétate de dibutylétain, l'octanoate de dibutylétain, le mercaptide de dibutylétain, le dilaurate de dioctylétain, le mercaptide de dioctylétain, le dimaléate de dioctylétain, la 4,4'-(oxydi-2,1-éthanediyl)blsmorpholine et la diméthyl-4-morpholine éthaneamine.

12. Composition de résine de polyuréthane selon la revendication 11, dans laquelle le catalyseur comprend du dilaurate de dioctylétain et de la 4,4'-(oxydi-2,1-éthanediyl)bismorpholine.

13. Composition de résine de polyuréthane selon la revendication 12, dans laquelle le catalyseur comprend en outre un ou plusieurs catalyseurs supplémentaires choisis dans le groupe consistant en le mercaptide de dibutylétain et la diméthyl-4-morpholine éthaneamine.

14. Composition de résine de polyuréthane selon la revendication 13, dans laquelle le dilaurate de dioctylétain, la 4,4'-(oxydi-2,1-éthanediyl)blsmorpholine et le catalyseur supplémentaire sont compris en un rapport pondéral de 0,01 à 0,3: 0,001 à 0,3: 0,001 à 0,1.

15. Composition de résine de polyuréthane selon la revendication 1, dans laquelle la composition comprend de 35 à 70 parties en poids de la première résine d'uréthane, de 3 à 14 parties en poids de la seconde résine d'uréthane et de 5 à 30 parties en poids du plastifiant.
